# DEMANDE DE BREVET EUROPEEN

(11) **EP 0 800 031 A1**
(43) Date de publication de la demande: **08.10.1997**
(21) Numéro de dépôt: 97420053.7
(22) Date de dépôt: 27.03.1997
(51) Int. Cl.: F16L 37/23

(54) **Raccord de tubulures pour le transport de fluides**

(30) Priorité: 01.04.1996 FR 9604289
(71) Demandeur: Clesse Industries, 63800 Cournon d'Auvergne (FR)
(72) Inventeur: Spiesser, Gilbert, 63670 Orcet (FR)
(74) Mandataire: Maureau, Philippe

(57) **Abrégé**

Raccord comportant un embout femelle (2), un embout mâle (3) et une bague de verrouillage montée coulissante sur l'embout femelle (2). La bague (10) et le corps (4) de l'embout femelle (2) comportent des moyens complémentaires permettant, dans une position angulaire précise de la bague (10) et du corps (4), le libre coulissement de la bague (10) sur le corps (4), et dans la position axiale de verrouillage de la bague (10), le pivotement de la bague (10) sur le corps (4), avec blocage axial de la bague (10)

Application à la connexion de tuyauteries de gaz.

## Description

La présente invention a pour objet un raccord pour la connexion de tubulures pour le transport de fluides, qu'il s'agisse de fluides liquides ou de fluides gazeux.

Il est connu d'utiliser des raccords de connexion rapide comprenant un embout femelle solidaire d'une première tubulure et un embout mâle solidaire d'une seconde tubulure et destiné à être engagé avec étanchéité dans l'embout femelle pour réaliser la connexion, l'embout femelle étant équipé d'une bague qui, montée coulissante axialement sur l'embout femelle permet, dans une première position axiale, un jeu radial d'un certain nombre de billes logées dans des perçages radiaux ménagés dans la paroi de l'embout femelle et, dans une seconde position axiale ou position de verrouillage, assure le maintien de ces billes en position radialement poussées vers l'intérieur où elles prennent appui contre un épaulement de l'embout mâle, et empêchent le retrait de celui-ci hors de l'embout femelle.

Il n'existe pas de dispositif de sécurité assurant le verrouillage des deux embouts en position raccordée. Il risque donc, sous une action exercée sur la bague, ou exercée sur l'un ou l'autre des deux embouts, de se produire un déplacement de la bague sur l'embout femelle, libérant l'embout mâle. Ce phénomène est d'autant plus risqué lorsque la bague est poussée par un ressort de compression dans le sens d'ouverture. Dans un tel cas, lors d'un déplacement en compression des deux embouts, la bague extérieure est propulsée par le ressort en position débrayée, et les billes libèrent la partie mâle, ce qui permet l'ouverture du raccord.

Or, ce type de raccord sert notamment pour le raccordement de tuyaux de gaz de soudure. Il convient donc d'assurer une bonne sécurité de la fermeture, même si l'embout femelle du raccord possède un clapet qui passe automatiquement en position de fermeture pour éviter l'échappement du gaz, dès que les deux embouts du raccord se désolidarisent.

Le but de l'invention est de fournir un raccord pour la connexion de tubulures, dont le maintien en position verrouillée soit garanti, afin d'assurer une complète sécurité vis-à-vis de toutes manoeuvres non voulues.

A cet effet, dans le raccord qu'elle concerne, du type précité, la bague et le corps de l'embout femelle comportent des moyens complémentaires permettant, dans une position angulaire précise de la bague et du corps, le libre coulissement de la bague sur le corps, et dans la position axiale de verrouillage de la bague, le pivotement de la bague sur le corps, avec blocage axial de la bague. Pour procéder au déplacement axial de la bague sur l'embout femelle, il convient que la bague soit dans une position angulaire bien déterminée par rapport à cet embout. Lorsque le raccord est en position de fermeture, la bague est pivotée relativement à l'embout femelle, passant dans une position dans laquelle elle est bloquée axialement. Compte tenu de ce blocage, une manoeuvre accidentelle du raccord ne se traduit pas par une ouverture de celui-ci.

Suivant une forme d'exécution de ce raccord, le corps de l'embout femelle est de forme générale cylindrique et présente, sur sa face extérieure, un méplat longitudinal de longueur au moins égale à la course axiale de la bague, tandis que la bague présente, à l'une de ses extrémités, un rebord tourné radialement vers l'intérieur, possédant un profil complémentaire de celui de la périphérie du corps, avec notamment une zone circulaire et une zone comportant un méplat, le corps comportant en outre, une gorge d'orientation périphérique débouchant dans sa paroi extérieure, et localisée en regard du rebord de la bague, lorsque celle-ci est en position de verrouillage.

Lorsque le méplat de la bague est superposé au méplat du corps de l'embout femelle, la bague peut coulisser. Au contraire, en position de fermeture du raccord, lors du pivotement de la bague sur le corps de l'embout femelle, le méplat du rebord de la bague est engagé dans la gorge de l'embout femelle, ce qui empêche tout mouvement axial de la bague.

Suivant une autre caractéristique de l'invention, la gorge ménagée dans le corps s'étend sur au moins une partie de la périphérie et à partir du méplat de celui-ci.

De toute façon, l'invention sera bien comprise à l'aide de la description qui suit, en référence au dessin schématique annexé représentant, à titre d'exemple non limitatif, une forme d'exécution de ce raccord :
Figure 1 est une vue en perspective éclatée des principaux éléments constitutifs de l'embout femelle d'un raccord ;
Figures 2 et 3 sont deux vues en coupe longitudinale de ce raccord respectivement en position désaccouplée des embouts femelle et mâle et en position accouplée des embouts femelle et mâle ;
Figures 4 et 5 sont deux vues en coupe transversale de ce raccord respectivement suivant les lignes IV-IV de figure 2 et V-V de figure 3.

Le raccord représenté au dessin est un raccord pour connexion rapide destiné notamment au raccordement de tuyaux de gaz de soudure.

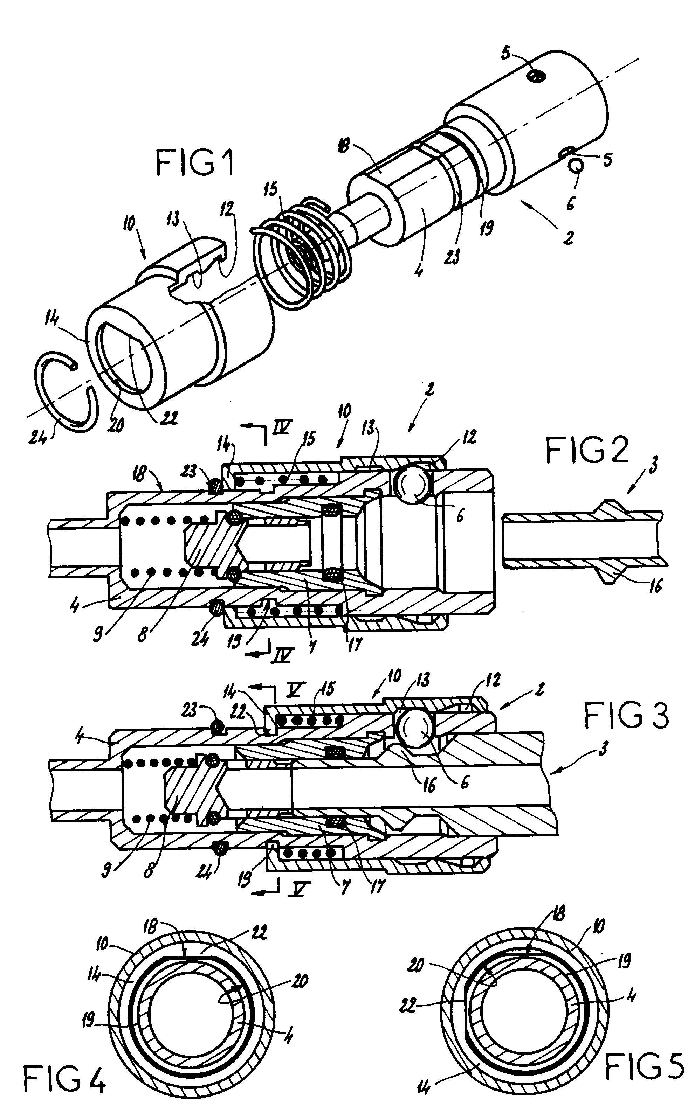

Ce raccord comprend un embout femelle 2 solidaire d'une première tubulure, non représentée, et un embout mâle 3 solidaire d'une seconde tubulure non représentée. L'embout femelle comprend un corps 4 de forme générale cylindrique à proximité de l'extrémité avant duquel sont ménagés des perçages radiaux 5 dans lesquels sont engagées des billes 6. A l'intérieur de l'embout femelle est montée une garniture 7, vis-à-vis de laquelle est monté coulissant un clapet 8 soumis à l'action d'un ressort 9. Le ressort 9 agit sur le clapet 8 pour maintenir celui-ci en appui en position de fermeture contre la garniture intérieure 7. Sur le corps 4 de l'embout femelle 2 est montée une bague cylindrique 10 dans la face inférieure de laquelle débouchent deux rainures 12 et 13. A son extrémité située du côté opposé à l'ouverture de l'embout, la bague 10 comporte un rebord 14 tourné radialement vers l'intérieur. Sur ce rebord prend appui un ressort de compression 15 dont l'autre extrémité est en appui contre un épaulement du corps 4. Le ressort 15 tend donc à déplacer la bague 10 dans la position représentée à la figure 2, position dans laquelle les billes sont dans la rainure 12 et ne sont donc pas contraintes radialement vers l'intérieur.

Comme montré notamment aux figures 2 et 3, l'embout mâle comporte un épaulement périphérique 16. Lorsque l'embout mâle est engagé dans l'embout femelle, son extrémité avant vient pousser le clapet 8 pour le faire passer en position d'ouverture, un joint 17 assure l'étanchéité de la connexion au niveau de l'extrémité avant de l'embout, et l'épaulement 16 dépasse la zone dans laquelle se trouvent les billes 6. Lorsque la bague est déplacée dans la position représentée à la figure 3, les billes viennent en appui dans la rainure 13 de la bague, et sont contraintes radialement vers l'intérieur, prenant appui contre l'épaulement 16 de l'embout et assurant la retenue de l'embout mâle dans l'embout femelle.

Suivant une caractéristique de l'invention, le corps 4 de l'embout femelle comporte un méplat 18 s'étendant longitudinalement, ainsi qu'une gorge 19 d'orientation périphérique, débouchant dans sa face extérieure. Cette gorge est située dans le plan dans lequel se trouve le rebord 14 de la bague 10 lorsque le raccord est en position de fermeture. Le rebord 14 comporte, pour sa part, une ouverture délimitée par un bord comportant une partie circulaire 20 de même profil que le corps 4, ainsi qu'un méplat 22 de même profil que le méplat 18 du corps. Lorsque l'embout femelle est en position d'ouverture, la bague étant poussée par le ressort de compression 15, le méplat 22 du rebord 14 se trouve en face du méplat 18 du corps 4, comme cela est montré aux figures 1, 2 et 4. La bague 10 peut alors coulisser axialement le long du corps. Lorsque le raccord est actionné vers sa position de fermeture, comme montré à la figure 3, la bague 10, en fin de course avant, présente son rebord 14 en regard de la gorge 19. Il est alors possible, pour verrouiller le raccord, de faire pivoter la bague 10 relativement au corps 4 de l'embout femelle 2, ce pivotement étant rendu possible par engagement du méplat 22 du rebord 14 dans la gorge 19 du corps de l'embout 2. La bague 10 ne peut alors plus coulisser axialement, assurant ainsi une fermeture sûre du raccord.

L'embout femelle comporte également une seconde gorge 23 destinée à l'engagement d'un circlips 24 assurant la retenue axiale de la bague en position d'ouverture.

Comme il ressort de ce qui précède, l'invention apporte une grande amélioration à la technique existante en fournissant un raccord de structure et d'utilisation simples, assurant une parfaite sécurité du verrouillage en position de fermeture.

Comme il va de soi, l'invention ne se limite pas à la seule forme d'exécution de ce raccord, décrite ci-dessus à titre d'exemple non limitatif, elle en embrasse au contraire toutes les variantes. C'est ainsi notamment que les moyens complémentaires permettant le verrouillage de la bague pourraient être différents, et constitués par exemple par un doigt appartenant à la bague, faisant saillie radialement vers l'intérieur, destiné à être engagé dans une rainure longitudinale ménagée dans le corps pour permettre le mouvement axial de la bague, cette rainure longitudinale débouchant dans la gorge périphérique définie précédemment. Le raccord selon l'invention pourrait également ne pas comporter de clapet obturateur.

## Revendications

1. Raccord pour la connexion de tubulures pour le transport de fluides, du type comprenant un embout femelle (2) solidaire d'une première tubulure et un embout mâle (3) solidaire d'une seconde tubulure et destiné à être engagé avec étanchéité dans l'embout femelle pour réaliser la connexion, l'embout femelle (2) étant équipé d'une bague (10) qui, montée coulissante axialement sur l'embout femelle permet, dans une première position axiale, un jeu radial d'un certain nombre de billes (6) logées dans des perçages radiaux (5) ménagés dans la paroi de l'embout femelle et, dans une seconde position axiale ou position de verrouillage, assure le maintien de ces billes (6) en position radialement poussées vers l'intérieur où elles prennent appui contre un épaulement (16) de l'embout mâle (3), et empêchent le retrait de celui-ci hors de l'embout femelle (2), caractérisé en ce que la bague (10) et le corps (4) de l'embout femelle (2) comportent des moyens complémentaires permettant, dans une position angulaire précise de la bague (10) et du corps (4), le libre coulissement de la bague (10) sur le corps (4), et dans la position axiale de verrouillage de la bague (10), le pivotement de la bague (10) sur le corps (4), avec blocage axial de la bague (10).

2. Raccord selon la revendication 1, caractérisé en ce que le corps (4) de l'embout femelle est de forme générale cylindrique et présente, sur sa face extérieure, un méplat longitudinal (18) de longueur au moins égale à la course axiale de la bague (10), tandis que la bague présente, à l'une de ses extrémités, un rebord (14) tourné radialement vers l'intérieur possédant un profil complémentaire de celui de la périphérie du corps, avec notamment une zone circulaire (22) et une zone (23) comportant un méplat, le corps comportant en outre, une gorge (19) d'orientation périphérique débouchant dans sa paroi extérieure, et localisée en regard du rebord (14) de la bague (10), lorsque celle-ci est en position de verrouillage.

3. Raccord selon la revendication 2, caractérisé en ce que la gorge (19) ménagée dans le corps (4) s'étend sur au moins une partie de la périphérie et à partir du méplat (18) de celui-ci.
